# EUROPÄISCHE PATENTANMELDUNG

(11) **EP 0 615 934 A1**
(43) Veröffentlichungstag der Anmeldung: **21.09.1994**
(21) Anmeldenummer: 94100585.2
(22) Anmeldetag: 17.01.1994
(51) Int. Cl.: B65G 65/06

(54) **Bagger**

(30) Priorität: 11.03.1993 DE 4307763
(71) Anmelder: RIETER-WERKE HÄNDLE Gmbh & Co. KG, D-78417 Konstanz (DE)
(72) Erfinder: Restle, Karl, D-78417 Konstanz (DE)
(74) Vertreter: Liesegang, Roland, Dr.-Ing.

(57) **Zusammenfassung**

Ein Bagger, der einen schwenkbar an einem Anlenkpunkt angelenkten Baggerausleger (4) mit daran beweglich angeordneten Baggermitteln (50) aufweist, wobei der Baggerausleger (4) entlang einem Materiallager (28) in einem Gebäude (24) zwischen das Materiallager begrenzenden seitlichen Wänden (23) verfahrbar ist, zeichnet sich dadurch aus, daß der Baggerausleger (4) mit seitlichen Abstreifern (40) zum Abstreifen von Restschichten des Materials von den Wänden (23) versehen ist.

## Beschreibung

Die Erfindung betrifft einen Bagger mit den Merkmalen des Oberbegriffs des Anspruchs 1.

Bagger dieser Art werden zum Abräumen von Material-Längslagern, -Querlagern oder -Rundlagern eingesetzt.

Wenn ein solcher Bagger in Betrieb an eine seitliche, das Materiallager begrenzende Betonwand in einer das Materiallager aufweisenden Halle heranfährt, wird bei einer von der Anmelderin auf den Markt gebrachten Ausführung durch Betätigen eines Endschalters dafür gesorgt, daß der Antrieb selbsttätig abgeschaltet wird, um ein Anlaufen an die Wand zu vermeiden und einen gewünschten Abstand zur Wand einzuhalten.

Dieser Abstand schwankt in der Praxis, weil einerseits der über das Materialiager frei auskragende Baggerausleger sich im Betrieb in 757 seitlicher Richtung elastisch verbiegen kann und weil andererseits Wände von oder in Gebäuden nicht exakt eben ausgeführt, insbesondere betoniert werden können. Dies führt zu unterschiedlich dicken Restschichten an den Gebäudewänden, was bei den großen Ausdehnungen solcher Materiallager zu schlechter Material- und Raumausnutzung und zu Betriebsstörungen am Bagger und an den nachfolgenden Maschinen führen kann.

Aus der DE 42 04 001 C1 ist ein Längsbagger gemäß den Oberbegriff des Anspruchs 1 bekannt, bei den zum Abbauen von Gut, welches an den seitlich des Materiallager begrenzende Wänden anhaftet, im Untertrum einer endlos umlaufenden Kratzerkette seitlich in Richtung der Wände ausfahrbare Aufreißeinrichtungen in Form von Dornen vorgesehen sind.

Bagger der im Oberbegriff beschriebenen Art sind an sich bekannt (DE 27 56 312 C2, DE 24 20 715 C2). Dabei sind jedoch keine Mittel für ein vollständiges Abbauen von Gut insbesondere in Wandnähe von seitlichen Begrenzungswänden eines Materiallagers vorgesehen.

Der Erfindung liegt die Aufgabe zugrunde, einen Bagger der im Oberbegriff des Anspruch 1 beschriebenen Art so auszubilden, daß das Material nahezu vollständig abgebaggert werden kann, so daß Materialverluste auf ein Minimum verringert, die Raumausnutzung verbessert und Betriebsstörungen und schädliche Auswirkungen auf das Endprodukt vermieden werden können.

Zur Lösung dieser Aufgabe dienen die Merkmale des Anspruchs 1.

Bei einem Bagger nach der Erfindung werden unabhängig von der Wandgeometrie der das Materiallager seitlich begrenzenden Wände und unabhängig von einer möglichen elastischen Verbiegung des Baggerauslegers quer dazu die an den Gebäudewänden anhaftenden Materialrestschichten mittels der seitlich an dem Baggerausleger angebrachten Abstreifer auf ein Minimum reduziert.

Bei einer bevorzugten Ausführung der Erfindung sind die Abstreifer mittels Hilfskraft seitlich vom Baggerausleger wegspreizbar, insbesondere mittels Federkraft. Dadurch wird erreicht, daß die Abstreifer unabhängig von der Wandgeometrie unter der Wirkung der Federkraft an die Wand gedrückt werden, was auch bei unterschiedlichen elastischen Verbiegungen und Wandunebenheiten stets eine Abstreifwirkung gewährleistet.

Weitere vorteilhafte Ausgestaltungen der Erfindung sind in den Unteransprüchen angegeben.

Die Erfindung ist im folgenden anhand schematischer Zeichnungen an einem Ausführungsbeispiel mit weiteren Einzelheiten näher erläutert.

Es zeigen:
- Fig. 1: einen Schnitt durch ein Gebäude mit Materiallager und Längsbagger mit über dem Material frei auskragendem Baggerausleger gemäß der Erfindung;
- Fig. 2: einen im Maßstab vergrößerten Schnitt nach der Linie II-II in Fig. 1 in einem an eine seitliche Gebäudewand angefahrenen Zustand des Längsbaggers nach Fig. 1.

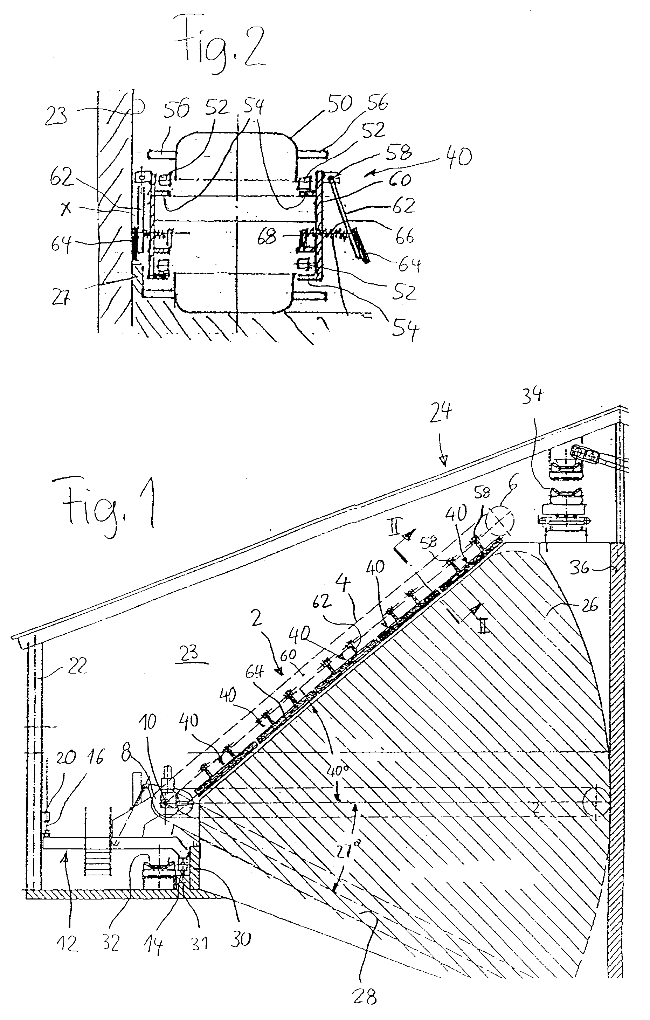

In den Figuren 1 und 2 sind gleiche oder gleichwirkende Teile mit gleichen Bezugszeichen bezeichnet.

Ein insgesamt mit der Bezugszahl 2 bezeichneter Längsbagger 2 umfaßt einen Baggerausleger 4 mit einer endlosen Kette, die über Kettenräder 6, 8 umläuft und in Figur 2 gezeigte Baggereimer oder -schaufeln 50 trägt. Der Baggerausleger 4 ist horizontal an einem Anlenkpunkt 10 schwenkbar an einem Wagen 12 angelenkt, der auf Schienen 14, 16 zwischen seitlichen Gebäudewänden verfahrbar ist, von denen in den Figuren nur eine zu sehen und mit der Bezugszahl 23 bezeichnet ist. Die als Hauptfahrschiene fungierende Schiene 14 ragt von einen Sockel 31 auf dem Boden 18 nach oben, während die als Stützschiene fungierende Schiene 16 von einem Gegendruckträger 20 an der Wand 22 eines insgesamt mit dem Bezugszeichen 24 bezeichneten Gebäudes nach unten hängt.

Bei dieser Anordnung ist die Abstützkraft des Wagens 12 auf die Hauptfahrschiene 14 vertikal nach unten gerichtet und um mehr als 1/3 größer als die vertikal nach oben gerichtete Abstützkraft auf die Stützschiene 16.

Der Baggerausleger 4 erstreckt sich oberhalb einer Materialansammlung 26, zum Beispiel von Ton, in einen Materiallager 28, das quer zu den Schienen 14, 16 durch die seitlichen Gebäudewände 23 und schienenseitig durch eine Stützmauer 30 begrenzt ist. Parallel zur Stützmauer 30 und zur Hauptfahrschiene 14 läuft ein Austragsband 32, das unterhalb der unteren Umlenkung (bei 8) des Baggerauslegers 4 so angeordnet ist, daß sich die Baggereimer 50 auf dieses Austragsband entleeren und abgebaggertes Gut über das Austragsband weggefördert werden können.

Aus der Figur 1 ist ersichtlich, daß eine in dem Materiallager 28 aufnehmbare Materialmenge 26 sich im Querschnittflächenbereich A zwischen Winkeln von z.B. +40° und -27° gegenüber der Horizontalen bewegen kann. Bei 34 ist ein Auftragsband dargestellt, über welches das Materiallager mit Material beschickbar ist.

In Fig. 1 sind seitlich längs des Baggerauslegers 4 angeordnete Abstreifer 40 zu erkennen, die in eine Gesamtzahl von fünf in Reihe angeordneten Abstreifern längs jeder Seite des Längsbaggers 4 vorgesehen sind. Jeder Abstreifer 40 erstreckt sich über eine Teillänge der Länge des Baggerauslegers, bei einer Gesamtlänge von 15 Metern also etwa über eine Teillänge von 3 m.

Anhand der Fig. 2 sei nun der Aufbau eines Abstreifers 40 im einzelnen erläutert.

In Fig. 2 sind mit 50 Baggereimer bezeichnet, die an einer endlosen Rollenkette angebracht sind, welche über Rollen 52 auf Laufbahnen 54 abrollt. Jeder Baggereimer hat beidseitig von ihm seitlich wegragende Seitenräumer 56, welche auf eine von der Genauigkeit der Wandgeometrie der Gebäudewände 23 und von der elastischen Verformung des Baggerauslegers 4 abhängige Materialrestschicht 27 einwirken, die an der Gebäudewand 23 anhaftet.

Jeder Abstreifer 40 weist mindestens zwei Gelenklager 58 am oberen Ende von festen Seitenwänden 60 des Baggerauslegers 4 auf, in denen für jeden Abstreifer 40 insgesamt zwei nach unten hängende Hebel 62 schwenkbar gelagert sind. An diesen beiden Hebeln 62 ist nach außen weisend eine Abstreifleiste 64 angebracht.

Auf die Hebel 62 bzw. die Abstreifleiste 64 wirken in Führungen geführte Druckfedern 66 ein, welche mit ihren inneren Enden an mit den Seitenwänden 60 verbundenen Stützen 68 abgestützt sind und die Abstreifleisten 64 um die Gelenklager 58 nach außen gegen einen einstellbaren Anschlag (nicht gezeigt) spreizen. Statt Druckfedern können z.B. auch Fluid-Zylinder üblicher Bauart zur Erzeugung der Spreizkräfte eingesetzt werden.

Die Abstreifleisten 64 können anstatt an zwei Hebeln 62 auch an mehr Hebeln befestigt sein.

In Betrieb werden die Abstreifleisten 64 unabhängig voneinander durch die Druckfedern 66 um die Gelenklager 58 nach außen, d.h. von dem Baggerausleger 4 seitlich weggespreizt. Fährt nun der Baggerausleger 4 gegen die Gebäudewand 23 und hält, gesteuert durch einen nicht gezeigten Endschalter, in einem bestimmten Abstand von der Wand an, so werden die Abstreifleisten 64 in Anpassung an die Unebenheiten der Gebäudewand 23 und der seitlichen Biegung des Baggerauslegers 4 an die Wand 23 angedrückt. Im Bereich x wird die Wand durch die Abstreifer 64 also unabhängig von der Wandgeometrie der Wand 23 und der seitlichen Auslegerbiegung bei der Absenkung des Baggerauslegers 4 aufgrund des Einstichs der Baggereimer 50 in das zu befördernde Material abgestreift, und zwar bis zu einem der Einstichtiefe entsprechenden Bereich, so daß lediglich eine Material-Restschicht 27 unterhalb der Abstreifleisten 64 stehenbleibt.

Anschließend wird der Baggerausleger 4 von der Gebäudewand 23 in Fig. 1 gesehen nach rechts zur gegenüberstehenden Gebäudewand (nicht gezeigt) verfahren, wo der gleiche Vorgang auf der in Fig. 1 gesehen rechten Seite des Baggerauslegers erfolgt, die Abstreifleisten 64 also an, die (nicht gezeigte) rechte Gebäudewand angedrückt werden, während die linken Abstreifleisten 64 (aufgrund fehlender Belastung) nach links vom Baggerausleger weggespreizt sind.

Der beschriebene Vorgang wiederholt sich dann abwechselnd auf den beiden Gebäudeseiten bis zur vollständigen Entleerung des Materiallagers.

Der Anlenkpunkt 10 ist im Falle eines Material-Rundlagers nicht an einem auf Schienen verfahrbaren Wagen sondern an einer um eine vertikale Achse drehbaren Stütze angeordnet, so daß der Baggerausleger dann um einen der Winkelausdehnung des Rundlagers entsprechenden Winkelbereich durch azimutales Verschwenken über dem Material-Rundlager zwischen radial zu der Stütze liegenden seitlichen Begrenzungswänden des Rundlagers um die vertikale Stützenachse verdreht wird.

## Patentansprüche

1. Bagger, der einen schwenkbar an einem Anlenkpunkt (10) angelenkten Baggerausleger (4) mit daran beweglich angeordneten Baggermitteln aufweist, wobei der Baggerausleger entlang einem Materiallager (28) in einem Gebäude (24) zwischen das Materiallager (28) begrenzenden Wänden (23) bewegbar ist,
dadurch **gekennzeichnet**, daß der Baggerausleger (4) mit seitlichen Abstreifern (40) zum Abstreifen von Restschichten des Materials von den Wänden (23) versehen ist.

2. Bagger nach Anspruch 1, dadurch **gekennzeichnet**, daß Abstreifer (40) auf beiden Seiten des Baggerauslegers (4) angeordnet sind.

3. Bagger nach Anspruch 2, dadurch **gekennzeichnet**, daß die Abstreifer (40) um parallel zur Längsrichtung des Baggerauslegers (4) verlaufende Achsen (bei 58) schwenkbar an den Seiten des Baggerauslegers (4) angelenkt und mit ihren freien Enden von dem Baggerausleger mittels Hilfskraft wegspreizbar ausgebildet sind.

4. Bagger nach Anspruch 3, dadurch **gekennzeichnet**, daß die freien Enden der Abstreifer unter Federbelastung (Federn 66) stehen.

5. Bagger nach einem der Ansprüche 1 bis 4, dadurch **gekennzeichnet**, daß jeder Abstreifer (40) Gelenklager (58) an oberen festen Teilen (60) des Baggerauslegers (4), mindestens zwei in den Gelenklagern (58) schwenkbare Gelenkhebel (62) und mit den freien unteren Enden der Gelenkhebel verbundene Abstreifleisten (64) aufweist, die sich jeweils über eine Teillänge des Baggerauslegers (4) erstrecken und auf die Druckfedern (66) einwirken.

6. Bagger nach Anspruch 5, dadurch **gekennzeichnet**, daß mehrere Abstreifer (40) auf jeder Seite des Baggerauslegers (4) so angeordnet sind, daß die aneinander anschließenden, jeweils eine Teillänge überstreichenden Abstreifer die Gesamtlänge des Baggerauslegers auf der betreffenden Seite überdecken.
